# EUROPÄISCHE PATENTANMELDUNG

(11) **EP 2 815 796 A1**
(43) Veröffentlichungstag der Anmeldung: **24.12.2014**
(21) Anmeldenummer: 14172574.7
(22) Anmeldetag: 16.06.2014
(51) Int. Cl.: B01D 29/21

(54) **Filterelement**

(30) Priorität: 17.06.2013 DE 102013106264
(71) Anmelder: FSP Fluid Systems Partners Holding AG, 6340 Baar (CH)
(72) Erfinder: Weiser, Thomas, 74889 Sinsheim (DE); Deschner, Klaus, 76684 Östringen (DE)
(74) Vertreter: Hoeger, Stellrecht & Partner Patentanwälte

(57) **Zusammenfassung**

Die Erfindung betrifft ein Filterelement (10) zum Filtrieren einer Flüssigkeit, insbesondere eines Hydrauliköls, mit einem zylinderförmigen Filtermaterial (12), an dessen Stirnseiten (18, 24) jeweils eine Endscheibe (20, 26) angeordnet ist, wobei zumindest eine erste Endscheibe (20) einen zentralen Durchlass (22) aufweist, der von einem einen Dichtring (64) aufnehmenden Ringraum (62) umgeben ist und in den ein Endstück (68) einer Flüssigkeitsleitung (70) einführbar ist. Um das Filterelement derart weiterzubilden, dass es auch an Endstücken von Flüssigkeitsleitungen montiert werden kann, deren Außendurchmesser sich im Bereich des Durchlasses der Endscheibe verändert, wird vorgeschlagen, dass die erste Endscheibe (20) ein ortsfestes Scheibenteil (28) und ein bewegliches Scheibenteil (30) aufweist, wobei das ortsfeste Scheibenteil (28) an einer Stirnseite (18) des Filtermaterials (12) ortsfest fixiert und das bewegliche Scheibenteil (30) axial beweglich am ortsfesten Scheibenteil (28) gehalten ist, wobei die beiden Scheibenteile (28, 30) den Ringraum (62) begrenzen, der einen Bereich größeren Durchmessers und einen Bereich kleineren Durchmessers aufweist, die axial versetzt zueinander angeordnet sind, und wobei der Dichtring (64) durch eine Annäherung des beweglichen Scheibenteils (30) an das ortsfeste Scheibenteil (28) aus dem Bereich größeren Durchmessers in den Bereich kleineren Durchmessers des Ringraums (62) überführbar ist.

## Beschreibung

Die Erfindung betrifft ein Filterelement zum Filtrieren einer Flüssigkeit, insbesondere eines Hydrauliköls, mit einem zylinderförmigen Filtermaterial, an dessen Stirnseiten jeweils eine Endscheibe angeordnet ist, wobei zumindest eine erste Endscheibe einen zentralen Durchlass aufweist, der von einem einen Dichtring aufnehmenden Ringraum umgeben ist und in den ein Endstück einer Flüssigkeitsleitung einführbar ist.

Derartige Filterelemente sind aus der Veröffentlichung DE 101 42 774 A1 bekannt. Sie kommen unter anderem in Hydrauliksystemen zum Einsatz, insbesondere bei selbstfahrenden Maschinen, wie zum Beispiel Baumaschinen oder Landmaschinen, und auch bei Werkzeug- und Bearbeitungsmaschinen, zum Beispiel Spritzgussmaschinen. Mittels der Filterelemente kann beispielsweise ein Hydrauliköl gefiltert werden, das ein Filtermaterial des Filterelements durchströmt. Das Filtermaterial ist zylinderförmig ausgestaltet und häufig sternförmig gefaltet. An seinen Stirnseiten wird das Filtermaterial von Endscheiben abgedichtet. Zumindest eine Endscheibe weist einen zentralen Durchlass auf. Bei der Montage des Filterelements kann ein Endstück einer Flüssigkeitsleitung in den Durchlass eingeführt werden. Um das Filterelement flüssigkeitsdicht mit dem Endstück zu verbinden, ist in einem den Durchlass umgebenden Ringraum der Endscheibe ein Dichtring, insbesondere ein O-Ring, angeordnet, der das Endstück außenseitig umgibt.

Während des Betriebs setzt sich das Filterelement allmählich mit Schmutzpartikeln zu. Das Filterelement muss deshalb nach einer gewissen Zeit ausgetauscht werde. Hierzu kann das Filterelement von dem Endstück der Flüssigkeitsleitung, das in den Durchlass eintaucht, abgenommen und durch ein neues Filterelement ersetzt werden.

Der im Ringraum der ersten Endscheibe angeordnete Dichtring trennt bei Einsatz des Filterelements den Bereich der ungefilterten Flüssigkeit vom Bereich der gefilterten Flüssigkeit. Hierzu ist es erforderlich, dass der Dichtring einerseits an der Außenseite des in den Durchlass eintauchenden Endstücks der Flüssigkeitsleitung und andererseits an der Bodenwand des Ringraums dicht anliegt. Da der Dichtring in aller Regel nur geringfügig gestaucht werden kann, müssen die Schnurstärke des Dichtrings, der Außendurchmesser des Endstücks der Flüssigkeitsleitung und der Durchmesser der Bodenwand des Ringraums sorgfältig aufeinander abgestimmt werden, wobei insbesondere an die Maßhaltigkeit des Außendurchmessers des in den Durchlass eintauchenden Endstücks hohe Anforderungen gestellt werden. Der Außendurchmesser des Endstücks darf in dem den Durchlass durchgreifenden Bereich möglichst keine Änderungen aufweisen.

Aus der Druckschrift US 2003/0183568 A1 ist ein in axialer Richtung längenveränderliches Filterelement bekannt mit einem hohlzylindrischen Filtermaterial und einer stirnseitigen Endscheibe, die einen zentralen Durchlass aufweist. Die Endscheibe weist ein ortsfestes Scheibenteil auf, das an einer Stirnseite des Filtermaterials ortsfest fixiert ist, und ein in axialer Richtung bewegliches Scheibenteil, das mit einem Stutzen eine zentrale Öffnung des ortsfesten Scheibenteils durchgreift.

Die Druckschrift DE 102 59 900 A1 offenbart ein Filterelement, bei dem am zentralen Durchlass einer stirnseitig an einem hohlzylindrischen Filtermaterial angeordneten Endscheibe eine Haltevorrichtung für einen O-Ring angeordnet ist. Die Haltevorrichtung besteht aus einem Dichtungshalter, der an der Endscheibe festgelegt ist, und einem Haltering, der über eine Rastverbindung mit dem Dichtungshalter verbunden ist und in Kombination mit dem Dichtungshalter einen Ringraum ausbildet, in dem der O-Ring positioniert ist.

Es sind auch Filterelemente bekannt (DE 199 35 297 A1, DE 199 33 205 A1, DE 10 2004 005 211 A1), bei denen die stirnseitig am hohlzylindrischen Filtermaterial angeordnete Endscheibe mit ihrem den zentralen Durchlass umgebenden Innenrand eine Dichtlippe ausbildet.

Darüber hinaus ist aus der Druckschrift DE 199 51 085 A1 ein Filterelement bekannt, an dessen Endscheibe ein Stutzen angeformt ist. Der Stutzen trägt an seiner Außenseite eine Ringnut, in der ein O-Ring positioniert ist. Der Stutzen kann in ein Endstück einer Flüssigkeitsleitung eingesetzt werden. Eine ähnliche Ausgestaltung eines Filterelements ist in der Druckschrift EP 0 788 823 A1 beschrieben, wobei bei diesem Filterelement die Endscheibe zweiteilig ausgebildet ist.

Aufgabe der vorliegenden Erfindung ist es, ein Filterelement der eingangs genannten Art derart weiterzubilden, dass es auch an Endstücken von Flüssigkeitsleitungen dicht montiert werden kann, deren Außendurchmesser sich im Bereich des Durchlasses der Endscheibe ändert.

Diese Aufgabe wird bei einem Filterelement der gattungsgemäßen Art erfindungsgemäß dadurch gelöst, dass die erste Endscheibe ein ortsfestes Scheibenteil und ein bewegliches Scheibenteil aufweist, wobei das ortsfeste Scheibenteil an einer Stirnseite des Filtermaterials ortsfest fixiert und das bewegliche Scheibenteil bezogen auf die Längsachse des Filterelements axial beweglich am ortsfesten Scheibenteil gehalten ist, wobei die beiden Scheibenteile den Ringraum begrenzen und der Ringraum einen Bereich größeren Durchmessers und einen Bereich kleineren Durchmessers aufweist, die axial versetzt zueinander angeordnet sind, und wobei der Dichtring durch eine Annäherung des beweglichen Scheibenteils an das ortsfeste Scheibenteil aus dem Bereich größeren Durchmessers in den Bereich kleineren Durchmessers des Ringraums überführbar ist.

Das erfindungsgemäße Filterelement weist eine erste Endscheibe auf mit einem ortsfesten und einem beweglichen Scheibenteil. Das ortsfeste Scheibenteil ist an einer Stirnseite des Filtermaterials unbeweglich gehalten und das bewegliche Scheibenteil kann relativ zum ortsfesten Scheibenteil in axialer Richtung des Filterelements bewegt werden. Die beiden Scheibenteile begrenzen den Ringraum, der den Dichtring aufnimmt und den Durchlass der ersten Endscheibe umgibt. Der Ringraum weist beim erfindungsgemäßen Filterelement einen Bereich größeren Durchmessers und einen Bereich kleineren Durchmessers auf, die axial versetzt zueinander angeordnet sind. Der Dichtring kann eine Position im Bereich größeren Durchmessers oder auch eine Position im Bereich kleineren Durchmessers einnehmen. Durch eine Annäherung des beweglichen Scheibenteils an das ortsfeste Scheibenteil wird der Dichtring aus dem Bereich größeren Durchmessers in den Bereich kleineren Durchmessers überführt, das heißt die Lage des Dichtrings innerhalb des Ringraums ändert sich durch eine Annäherung des beweglichen Scheibenteils an das ortsfeste Scheibenteil derart, dass der Dichtring nach der Annäherung eine Stellung im Bereich des Ringraums mit kleinerem Durchmesser einnehmen kann.

Bei der Montage des erfindungsgemäßen Filterelements am Endstück einer Flüssigkeitsleitung kann das bewegliche Scheibenteil zunächst eine Stellung einnehmen, in der es zum ortsfesten Scheibenteil maximal beabstandet ist. Der Dichtring kann eine Position im Bereich des Ringraums mit größerem Durchmesser einnehmen. Dies gibt dem Dichtring die Möglichkeit, sich erforderlichenfalls in radialer Richtung auszudehnen, falls das Endstück der Flüssigkeitsleitung, das in den Durchlass der ersten Endscheibe eingeführt wird, an seinem freien Ende einen verhältnismäßig großen Außendurchmesser aufweist. Verjüngt sich das Endstück im Abstand zu seinem freien Ende, so kann sich der Dichtring, nachdem er den Bereich mit verhältnismäßig großem Außendurchmesser passiert hat, wieder entspannen und sich an die Außenseite des Endstücks dicht anlegen. Durch eine Annäherung des beweglichen Scheibenteils an das ortsfeste Scheibenteil kann die Relativlage des Dichtrings innerhalb des Ringraums derart verändert werden, dass der zunächst im Bereich des Ringraums mit größerem Durchmesser positionierte Dichtring eine Stellung im Bereich des Ringraums mit kleinerem Durchmesser einnimmt, so dass der Dichtring nach Abschluss der Montage des Filterelements nicht nur an der Außenseite des Endstücks der Flüssigkeitsleitung sondern auch an der Bodenwand des Ringraums der ersten Endscheibe dicht anliegt.

Die Bereitstellung eines Ringraums mit Bereichen unterschiedlichen Durchmessers in Kombination mit der Bereitstellung einer Endscheibe, deren bewegliches Scheibenteil den Dichtring durch Annäherung an das ortsfeste Scheibenteil in den Bereich kleineren Durchmessers des Ringraums überführt, hat somit den Vorteil, dass das Filterelement zuverlässig auch an Endstücken von Flüssigkeitsleitungen montiert werden kann, deren Außendurchmesser sich im Abstand zum freien Ende des Endstücks verjüngt. Die Anforderungen an die Fertigungsgenauigkeit der Endstücke können somit reduziert werden und durch eine Formgebung der Endstücke dergestalt, dass sie an ihrem freien Ende einen größeren Außendurchmesser aufweisen als in einem Abstand zum freien Ende, kann sichergestellt werden, dass an derartige Endstücke nur Filterelemente der voranstehend erläuterten Art montiert werden können.

Von Vorteil ist es, wenn das bewegliche Scheibenteil am ortsfesten Scheibenteil unverlierbar gehalten ist. Ein unbeabsichtigtes Ablösen des beweglichen Scheibenteils vom ortsfesten Scheibenteil kann dadurch zuverlässig vermieden werden.

Günstig ist es, wenn das bewegliche Scheibenteil mit dem ortsfesten Scheibenteil verrastbar ist. Dies erleichtert die Herstellung der ersten Endscheibe des erfindungsgemäßen Filterelements, da beim Zusammenfügen der ersten Endscheibe das bewegliche Scheibenteil mit dem ortsfesten Scheibenteil auf einfache Weise verrastet werden kann. Insbesondere eine werkzeuglose Verrastung, also eine Verrastung, bei der keine Spezialwerkzeuge erforderlich sind, hat sich als vorteilhaft erwiesen.

Bei einer bevorzugten Ausführungsform des erfindungsgemäßen Filterelements hintergreift das bewegliche Scheibenteil das ortsfeste Scheibenteil bezogen auf die Längsachse des Filterelements in axialer Richtung. Beim Zusammenfügen der ersten Endscheibe kann das bewegliche Scheibenteil in axialer Richtung auf das ortsfeste Scheibenteil aufgesetzt werden, wobei das bewegliche Scheibenteil Verbindungselemente aufweist, die das ortsfeste Scheibenteil in axialer Richtung hintergreifen. Hierzu können beispielsweise erste Rastelemente zum Einsatz kommen, die komplementär ausgestaltete zweite Rastelemente hintergreifen. Die ersten Rastelemente können nach Art von Laschen ausgebildet sein und auch die zweiten Rastelemente können laschenförmig ausgestaltet sein. Die Laschen können beispielsweise als Teilringe ausgebildet sein, die fluchtend zur Längsachse des Filterelements ausgerichtet sind und sich in Umfangsrichtung jeweils über einen Winkelbereich von beispielsweise 30° erstrecken. Mehrere Laschen können bezogen auf die Längsachse des Filterelements in Umfangsrichtung gleichmäßig oder ungleichmäßig verteilt angeordnet sein.

Bei einer bevorzugten Ausgestaltung des erfindungsgemäßen Filterelements weist der Ringraum eine bezogen auf die Längsachse des Filterelements konisch ausgestaltete Bodenwand auf. Eine derartige Formgebung der Bodenwand hat den Vorteil, dass der Bereich größeren Durchmessers des Ringraums in axialer Richtung kontinuierlich in den Bereich geringeren Durchmessers übergeht. Der Durchmesser des Ringraums verkleinert sich somit kontinuierlich ausgehend vom Bereich größeren Durchmessers bis zum Bereich kleineren Durchmessers.

Alternativ kann vorgesehen sein, dass sich der Durchmesser der Bodenwand des Ringraums ausgehend vom Bereich größeren Durchmessers über eine oder mehrere Stufen abrupt verkleinert bis zum Bereich kleineren Durchmessers.

Die Bodenwand ist bevorzugt von einem Ringkragen des ortsfesten oder des beweglichen Scheibenteils gebildet. Der Ringkragen ist günstigerweise konisch ausgebildet, so dass der Innendurchmesser des Ringkragens ausgehend von einem Bereich größeren Durchmessers kontinuierlich in einen Bereich kleineren Durchmessers übergeht.

Bei einer vorteilhaften Ausführungsform der Erfindung weist das ortsfeste Scheibenteil einen Abdeckring auf, der eine Stirnseite des Filtermaterials abdeckt, und der Ringkragen steht auf der dem Filtermaterial abgewandten Seite vom Abdeckring ab. Der Abdeckring kann einen Teil einer Endkappe ausbilden, die einen stirnseitigen Endbereich des Filtermaterials innenseitig und außenseitig umgreift. Von der Endkappe kann der Ringkragen in die dem Filtermaterial abgewandte Richtung abstehen.

Der Abdeckring ist günstigerweise einstückig mit dem Ringkragen verbunden. Insbesondere kann vorgesehen sein, dass der Abdeckring und der Ringkragen als einteiliges Kunststoffformteil ausgestaltet sind.

Bei einer bevorzugten Ausgestaltung der Erfindung bildet eines der beiden Scheibenteile, also das ortsfeste Scheibenteil oder das bewegliche Scheibenteil, eine Bodenwand des Ringraums aus mit Bodenwandbereichen unterschiedlichen Durchmessers, und das andere Scheibenteil bildet eine Seitenwand des Ringraums aus, an die der Dichtring anlegbar ist. Werden die beiden Scheibenteile aufeinander zubewegt, so drückt die von einem Scheibenteil ausgebildete Seitenwand des Ringraums den Dichtring entlang der Bodenwand, so dass er ausgehend von einem Bereich größeren Durchmessers des Ringraums in einen Bereich kleineren Durchmessers überführt werden kann.

Das bewegliche Scheibenteil weist günstigerweise einen Stützring auf, der eine Seitenwand des Ringraums ausbildet und an den der Dichtring anlegbar ist. Wie bereits erläutert, ermöglicht es der Stützring, den im Ringraum angeordneten Dichtring aus einem Bereich größeren Durchmessers in einen Bereich kleineren Durchmessers zu bewegen.

Der Stützring ist bei einer vorteilhaften Ausgestaltung starr mit einem Haltering verbunden, der das ortsfeste Scheibenteil umgibt.

Von Vorteil ist es, wenn das ortsfeste Scheibenteil einen Ringkragen aufweist, der bei einer Annäherung des beweglichen Scheibenteils an das ortsfeste Scheibenteil zumindest teilweise in einen Zwischenraum zwischen dem Stützring und dem Haltering eintaucht. Der Ringkragen kann, wie bereits erläutert, eine Bodenwand des Ringraums ausbilden und ist vorzugsweise konisch ausgestaltet. Der Stützring des beweglichen Scheibenteils kann den im Ringraum angeordneten Dichtring bei einer Annäherung des beweglichen Scheibenteils an das ortsfeste Scheibenteil in den Bereich kleineren Durchmessers des Ringraums bewegen, und mittels des Halterings kann das bewegliche Scheibenteil zuverlässig am ortsfesten Scheibenteil gehalten werden, wobei bei einer Annäherung des beweglichen Scheibenteils an das ortsfeste Scheibenteil der Ringkragen des ortsfesten Scheibenteils in den Zwischenraum zwischen dem Stützring und dem Haltering des beweglichen Scheibenteils eintaucht.

Von besonderem Vorteil ist es, wenn das bewegliche Scheibenteil einen Stoßring aufweist, der an eine Schulter der in den Durchlass einführbaren Flüssigkeitsleitung anlegbar ist. Bei der Montage des Filterelements am Endstück der Flüssigkeitsleitung kann das bewegliche Scheibenteil mit seinem Stoßring an eine Schulter der Flüssigkeitsleitung anstoßen. Im Bereich der Schulter erweitert sich der Außendurchmesser der Flüssigkeitsleitung, so dass der Stoßring des beweglichen Scheibenteils in axialer Richtung an der Schulter abgestützt wird. Beim weiteren Einführen des Endstücks der Flüssigkeitsleitung in den Durchlass der ersten Endscheibe verringert sich der Abstand zwischen dem an der Schulter anliegenden beweglichen Scheibenteil und dem ortsfesten Scheibenteil der ersten Endscheibe, so dass der Dichtring, der sich am beweglichen Scheibenteil in axialer Richtung abstützen kann, in Richtung auf das ortsfeste Scheibenteil bewegt wird und dadurch im Ringraum eine Position im Bereich kleineren Durchmessers einnehmen kann.

Eine axiale Abstützung des beweglichen Scheibenteils mittels eines Stoßrings an einer Schuler der Flüssigkeitsleitung ist von besonderem Vorteil, wenn das Filterelement in radialer Richtung von außen nach innen von Flüssigkeit durchströmt wird, die anschließend in axialer Richtung über die Flüssigkeitsleitung abgeführt werden kann. Die Flüssigkeit erfährt beim Durchströmen des Filtermaterials einen Druckverlust und es bildet sich eine Druckdifferenz aus. Dadurch wird das Filterelement in axialer Richtung soweit entlang der Flüssigkeitsleitung verschoben, bis das bewegliche Scheibenteil mit seinem Stoßring an der Schulter der Flüssigkeitsleitung anstößt und sich dadurch an der Schulter abstützen kann. Die Relativbewegung zwischen dem ortsfesten Scheibenteil und dem beweglichen Scheibenteil hat zur Folge, dass der Dichtring in einen Bereich des Ringraums mit geringerem Durchmesser überführt wird und dadurch zuverlässig einerseits an der Außenseite des Endstücks der Flüssigkeitsleitung und andererseits an der Bodenwand des Ringraums dicht anliegt.

Der Stoßring des beweglichen Scheibenteils ist günstigerweise starr mit einem eine Seitenwand des Ringraums ausbildenden Stützring und einem eine Bodenwand des Ringraums umgebenden Haltering verbunden.

Von besonderem Vorteil ist es, wenn die beiden Scheibenteile als Kunststoffformteile ausgebildet sind und werkzeuglos miteinander verbindbar sind. Wie bereits erwähnt, kann beispielsweise vorgesehen sein, dass die beiden Scheibenteile werkzeuglos miteinander verrastbar sind.

Die nachfolgende Beschreibung einer bevorzugten Ausführungsform der Erfindung dient im Zusammenhang mit der Zeichnung der näheren Erläuterung. Es zeigen:
- Figur 1:: eine schematische Schnittansicht eines erfindungsgemäßen Filterelements, wobei ein Dichtring im Bereich eines größeren Durchmessers eines Ringraums positioniert ist, und
- Figur 2:: eine schematische Teilschnittansicht des Filterelements aus Figur 1 nach einer Montage am Endstück einer Flüssigkeitsleitung, wobei der Dichtring in einem Bereich des Ringraums mit kleinerem Durchmesser positioniert ist.

In der Zeichnung ist schematisch eine vorteilhafte Ausführungsform eines erfindungsgemäßen Filterelements dargestellt, das insgesamt mit dem Bezugszeichen 10 belegt ist. Das Filterelement 10 umfasst ein zylindrisches Filtermaterial 12, das sternförmig gefaltet ist und ein Stützrohr 14 in Umfangsrichtung vollständig umgibt. Das Stützrohr 14 weist eine Vielzahl von Durchflussöffnungen 16 auf. Das Filtermaterial 12 kann in üblicher Weise mehrlagig ausgestaltet sein und beispielsweise eine Vorfilterschicht und eine Feinfilterschicht umfassen sowie eine an der Anströmseite der Vorfilterschicht angeordnete Schutzschicht und eine an der Abströmseite der Feinfilterschicht angeordnete Stützschicht.

An einer ersten Stirnseite 18 des Filtermaterials 12 ist eine erste Endscheibe 20 angeordnet, die die erste Stirnseite 18 abdichtet und einen zentralen Durchlass 22 aufweist.

An einer der ersten Stirnseite 18 abgewandten zweiten Stirnseite 24 des Filtermaterials 12 ist eine zweite Endscheibe 26 angeordnet, die die zweite Stirnseite 24 abdichtet, wobei sie keinerlei Durchlass aufweist.

Zu filtrierende Flüssigkeit, insbesondere ein zu filtrierendes Hydrauliköl, kann das Filtermaterial 12 radial von außen nach innen durchströmen und über den zentralen Durchlass 22 der ersten Endscheibe 20 aus dem Filterelement 10 herausströmen.

Die erste Endscheibe 20 ist zweiteilig ausgestaltet und umfasst ein ortsfestes Scheibenteil 28 und ein bewegliches Scheibenteil 30. Das ortsfeste Scheibenteil 28 weist einen ebenen, nach Art einer Scheibe ausgebildeten Abdeckring 32 auf, der an der ersten Stirnseite 18 des Filtermaterials 12 anliegt. An die Außenseite des Abdeckrings 32 schließt sich ein zylindrischer Außenring 36 an, der einen der ersten Stirnseite 18 benachbart angeordneten Endbereich des Filtermaterials 12 in Umfangsrichtung umgibt, und an die Innenseite des Abdeckrings 32 schließt sich ein zylindrischer Innenring 38 an, der konzentrisch zum zylindrischen Außenring 36 und konzentrisch zu einer Längsachse 40 des Filterelements 10 ausgerichtet ist und der das Stützrohr 14 innenseitig abstützt.

Von der dem Filtermaterial 12 abgewandten Oberseite des Abdeckrings 32 steht ein Ringkragen 42 ab, der konisch ausgebildet ist, wobei sich sein Durchmesser mit zunehmendem axialem Abstand vom Abdeckring 32 kontinuierlich vergrößert. An seinem dem Abdeckring 32 abgewandten Ende trägt der Ringkragen 42 radial nach außen weisende Rastvorsprünge 44, 46. Der Ringkragen 42 bildet gemeinsam mit dem Abdeckring 32, dem zylindrischen Außenring 36 und dem zylindrischen Innenring 38 ein einteiliges Kunststoffformtei

Das bewegliche Scheibenteil 30 weist auf seiner dem ortsfesten Scheibenteil 28 abgewandten Oberseite einen flanschartigen Stoßring 48 auf, der eine parallel zum Abdeckring 32 ausgerichtete Anschlagfläche 50 definiert und über mehrere Verbindungsstege 52, 54 mit einem Haltering 56 starr verbunden ist, der den Ringkragen 42 in Umfangsrichtung umgibt und die Rastvorsprünge 44, 46 des Ringkragens 42 hintergreift.

In dem von den Verbindungsstegen 52, 54 umgebenen Bereich schließt sich an den Stoßring 48 in axialer Richtung einstückig ein Stützring 58 an, der der Anschlagfläche 50 abgewandt eine Stützfläche 60 ausbildet.

Das ortsfeste Scheibenteil 28 und das bewegliche Scheibenteil 30 definieren gemeinsam einen Ringraum 62, der den Durchlass 22 in Umfangsrichtung umgibt und der einen Dichtring 64 aufnimmt. Der konische Ringkragen 42 bildet eine Bodenwand des Ringraums 62 aus. Eine erste Seitenwand des Ringraums 62 wird von der Stützfläche 60 des Stützrings 58 gebildet, und eine zweite Seitenwand des Ringraums 62 wird von einem radial innengelegenen Bereich 66 des Abdeckrings 30 gebildet.

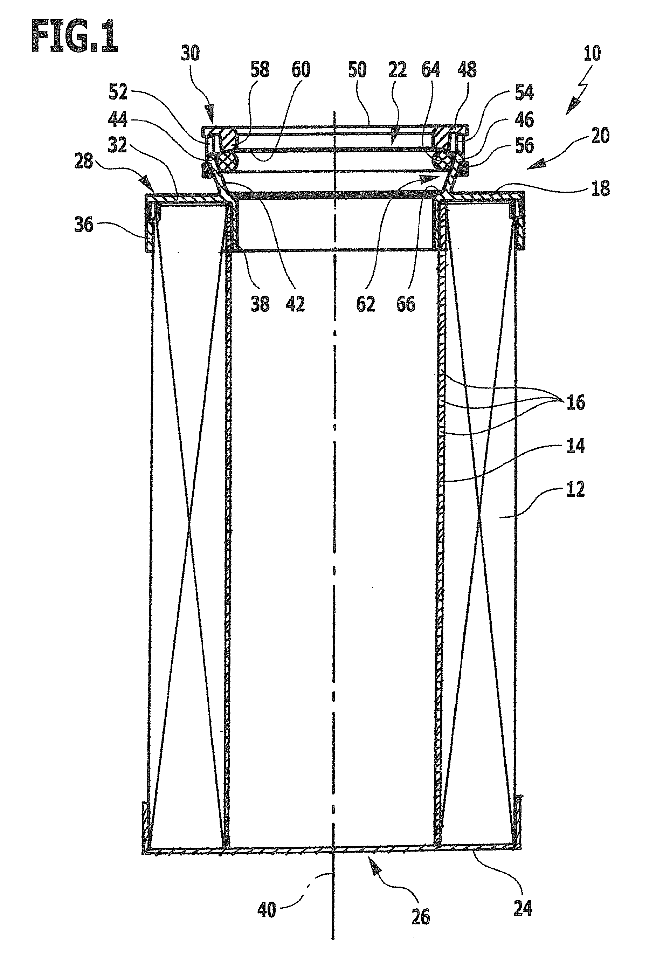

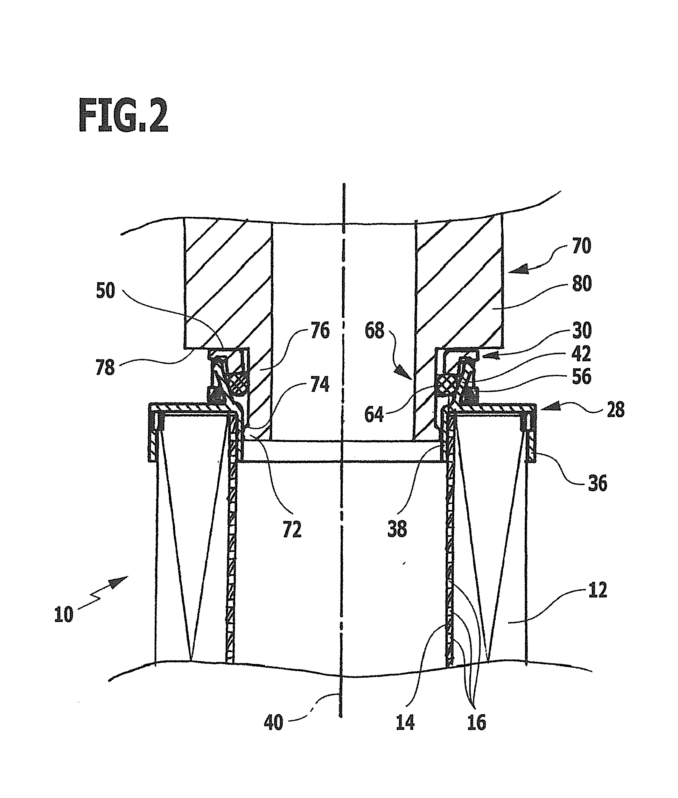

Das bewegliche Scheibenteil 30 kann in axialer Richtung relativ zum ortsfesten Scheibenteil 28 bewegt werden. In Figur 1 ist das bewegliche Scheibenteil 30 in einer zum ortsfesten Scheibenteil 28 maximal beabstandeten Stellung dargestellt, in der der Haltering 56 an den Rastvorsprüngen 44, 46 anliegt und der Ringraum 62 seine maximale Erstreckung in axialer Richtung bezogen auf die Längsachse 40 des Filterelements 10 aufweist. In dieser Stellung des beweglichen Scheibenteils 30 kann der Dichtring 64 eine Position einnehmen in Höhe des freien Endes des Ringkragens 42, das heißt eine Position in einem Bereich größeren Durchmessers des Ringraums 62. Wird das bewegliche Scheibenteil 30 in Richtung auf das ortsfeste Scheibenteil 28 bewegt, so wird der sich an der Stützfläche 60 in axialer Richtung abstützende Dichtring 64 innerhalb des Ringraums 62 in Richtung eines Bereichs des Ringraums 62 mit kleinerem Durchmesser bewegt. Dies wird aus Figur 2 deutlich. Der Bereich kleineren Durchmessers des Ringraums 62 ist dem Bereich 66 des Abdeckrings 30 benachbart angeordnet.

In Figur 2 ist der der ersten Endscheibe 20 zugewandte Endbereich des Filterelements 10 in einer Teilschnittdarstellung dargestellt, wobei das Filterelement 10 an einem Endstück 68 einer Flüssigkeitsleitung 70 montiert ist. Das Endstück 68 taucht in den Durchlass 22 ein und der Dichtring 64 liegt einerseits an der Außenseite des Endstücks 68 und andererseits an der vom Ringkragen 42 gebildeten Bodenwand des Ringraums 62 an.

Das Endstück 68 weist einen vorderen Endabschnitt 72 auf mit einem Außendurchmesser, der praktisch dem Innendurchmesser des zylindrischen Innenrings 38 des ortsfesten Scheibenteils 28 entspricht. An den vorderen Endabschnitt 72 schließt sich über eine konische Verengung 74 ein hinterer Endabschnitt 76 des Endstücks 28 an, und an den hinteren Endabschnitt 76 schließt sich über eine radial nach außen weisende Schulter 78 ein Leitungsabschnitt 80 der Flüssigkeitsleitung 70 an.

Das Filterelement 10 kann am Endstück 68 der Flüssigkeitsleitung 70 montiert werden, wobei, darauf wurde bereits hingewiesen, das Endstück 68 mit seinem vorderen Endabschnitt 72 in den Durchlass 22 des Filterelements 10 eintaucht. Bei der Montage des Filterelements 10 am Endstück 68 kann das bewegliche Scheibenteil 30 zunächst seine in Figur 1 dargestellte Stellung einnehmen, in der der Dichtring 64 in radialer Richtung so weit gedehnt werden kann, dass er an der Außenseite des vorderen Endabschnitts 72 entlanggeführt werden kann, bis er nach Passieren der konischen Verengung 74 den hinteren Endabschnitt 76 des Endstückes 68 erreicht. Der Dichtring 64 kann sich dann aufgrund des geringeren Außendurchmessers des hinteren Endabschnitts 76 in radialer Richtung entspannen. Beim Aufsetzen des Filterelements 10 auf das Endstück 68 trifft der Stoßring 48 des beweglichen Scheibenteils 30 auf die Schulter 78 der Flüssigkeitsleitung 70, so dass sich bei der weiteren Montage des Filterelements 10 das ortsfeste Scheibenteil 28 zusammen mit dem Filtermaterial 12 dem sich an der Schulter 78 abstützenden beweglichen Scheibenteil 30 annähert. Hierbei wird der sich an der Stützfläche 60 abstützende Dichtring 64 in den Bereich kleineren Durchmessers des Ringraums 62 versetzt, bis er einerseits an der Außenseite des hinteren Endabschnitts 76 und andererseits an der Innenseite des Ringkragens 42 dicht anliegt.

Während des Betriebs des Filterelements 10 wird dieses, darauf wurde bereits hingewiesen, in radialer Richtung von außen nach innen von Hydrauliköl durchströmt, das über die Flüssigkeitsleitung 70 aus dem Filterelement 10 herausströmen kann. Der sich dabei einstellende Druckabfall des Hydrauliköls führt dazu, dass das Filterelement 10 in axialer Richtung gegen die Schulter 78 gedrückt wird, so dass der Dichtring 64 während des Betriebs des Filterelements 10 zuverlässig seine abdichtende Stellung beibehält.

Soll das Filterelement 10 vom Endstück 68 der Flüssigkeitsleitung 70 getrennt werden, so kann es hierzu vom Endstück 68 in axialer Richtung abgezogen werden. Hierbei können die beiden Scheibenteile 28, 30 in axialer Richtung relativ zueinander bewegt werden, so dass der Dichtring 64 erneut eine Position in einem Bereich erweiterten Durchmessers des Ringraums 62 einnehmen und in radialer Richtung so weit gedehnt werden kann, dass er beim Entfernen des Filterelements 10 vom Endstück 68 den vorderen Endabschnitt 72 des Endstücks 68 trotz dessen größeren Durchmessers passieren kann.

## Patentansprüche

1. Filterelement zum Filtrieren einer Flüssigkeit mit einem zylinderförmigen Filtermaterial (12), an dessen Stirnseiten (18, 24) jeweils eine Endscheibe (20, 26) angeordnet ist, wobei zumindest eine erste Endscheibe (20) einen zentralen Durchlass (22) aufweist, der von einem einen Dichtring (64) aufnehmenden Ringraum (62) umgeben ist und in den ein Endstück (68) einer Flüssigkeitsleitung (70) einführbar ist, **dadurch gekennzeichnet, dass** die erste Endscheibe (20) ein ortsfestes Scheibenteil (28) und ein bewegliches Scheibenteil (30) aufweist, wobei das ortsfeste Scheibenteil (28) an einer Stirnseite (18) des Filtermaterials (12) ortsfest fixiert und das bewegliche Scheibenteil (30) bezogen auf die Längsachse (40) des Filterelements (10) axial beweglich am ortsfesten Scheibenteil (28) gehalten ist, wobei die beiden Scheibenteile (28, 30) den Ringraum (62) begrenzen, der einen Bereich größeren Durchmessers und einen Bereich kleineren Durchmessers aufweist, die axial versetzt zueinander angeordnet sind, und wobei der Dichtring (64) durch eine Annäherung des beweglichen Scheibenteils (30) an das ortsfeste Scheibenteil (28) aus dem Bereich größeren Durchmessers in den Bereich kleineren Durchmessers des Ringraums (62) überführbar ist.

2. Filterelement nach Anspruch 1, **dadurch gekennzeichnet, dass** das bewegliche Scheibenteil (30) am ortsfesten Scheibenteil (28) unverlierbar gehalten ist.

3. Filterelement nach Anspruch 1 oder 2, **dadurch gekennzeichnet, dass** das bewegliche Scheibenteil (30) mit dem ortsfesten Scheibenteil (28) verrastbar ist.

4. Filterelement nach einem der voranstehenden Ansprüche, **dadurch gekennzeichnet, dass** das bewegliche Scheibenteil (30) das ortsfeste Scheibenteil (28) bezogen auf die Längsachse (40) des Filterelements (10) in axialer Richtung hintergreift.

5. Filterelement nach einem der voranstehenden Ansprüche, **dadurch gekennzeichnet, dass** der Ringraum (62) eine bezogen auf die Längsachse (40) des Filterelements (10) konisch ausgestaltete Bodenwand aufweist.

6. Filterelement nach Anspruch 5, **dadurch gekennzeichnet, dass** die Bodenwand von einem Ringkragen (42) des ortsfesten oder des beweglichen Scheibenteils (28, 30) gebildet ist.

7. Filterelement nach Anspruch 6, **dadurch gekennzeichnet, dass** das ortsfeste Scheibenteil (28) einen Abdeckring (32) aufweist, der eine Stirnseite (18) des Filtermaterials (12) abdeckt, und dass der Ringkragen (42) auf der dem Filtermaterial (12) abgewandten Seite vom Abdeckring (32) absteht.

8. Filterelement nach Anspruch 7, **dadurch gekennzeichnet, dass** der Abdeckring (32) mit dem Ringkragen (42) einstückig verbunden ist.

9. Filterelement nach einem der voranstehenden Ansprüche, **dadurch gekennzeichnet, dass** eines der beiden Scheibenteile (28) eine Bodenwand des Ringraums (62) ausbildet, die Bereiche mit unterschiedlichen Durchmessern aufweist, und dass das andere Scheibenteil (30) eine Seitenwand des Ringraums (62) ausbildet, an die der Dichtring (64) anlegbar ist.

10. Filterelement nach einem der voranstehenden Ansprüche, **dadurch gekennzeichnet, dass** das bewegliche Scheibenteil (30) einen Stützring (58) aufweist, der eine Seitenwand des Ringraums (62) ausbildet und an den der Dichtring (64) anlegbar ist.

11. Filterelement nach Anspruch 10, **dadurch gekennzeichnet, dass** der Stützring (58) starr mit einem Haltering (56) verbunden ist, der eine Bodenwand des Ringraums (62) umgibt.

12. Filterelement nach Anspruch 11, **dadurch gekennzeichnet, dass** das ortsfeste Scheibenteil (28) einen Ringkragen (42) aufweist, der die Bodenwand des Ringraums (62) ausbildet und bei einer Annäherung des beweglichen Scheibenteils (30) an das ortsfeste Scheibenteil (28) zumindest teilweise in einen Zwischenraum zwischen dem Stützring (58) und dem Haltering (56) eintaucht.

13. Filterelement nach einem der voranstehenden Ansprüche, **dadurch gekennzeichnet, dass** das bewegliche Scheibenteil (30) einen Stoßring (48) aufweist, der an eine Schulter (78) der in den Durchlass (22) einführbaren Flüssigkeitsleitung (70) anlegbar ist.

14. Filterelement nach Anspruch 13, **dadurch gekennzeichnet, dass** der Stoßring (48) starr mit einem eine Seitenwand des Ringraums (62) ausbildenden Stützring (58) und einem eine Bodenwand des Ringraums (82) umgebenden Haltering (56) verbunden ist.

15. Filterelement nach einem der voranstehenden Ansprüche, **dadurch gekennzeichnet, dass** die beiden Scheibenteile (28, 30) als Kunststoffformteile ausgebildet und werkzeuglos miteinander verbindbar sind.
